# EUROPÄISCHE PATENTSCHRIFT

(11) **EP 4 228 421 B1**
(45) Veröffentlichungstag und Bekanntmachung des Hinweises auf die Patenterteilung: **19.08.2026**
(21) Anmeldenummer: 21786765.4
(22) Anmeldetag: 31.08.2021
(51) Int. Cl.: A23G 3/22, A23G 3/34, A23P 20/18, A23G 3/54, A23L 7/122, A23L 7/126, A23L 7/191, A23L 7/161

(54) **VERPACKTES POPCORN-KONFEKT UND VERFAHREN ZU SEINER HERSTELLUNG**
PACKAGED POPCORN CONFECTION, AND METHOD FOR MANUFACTURING SAME
CONFISERIE AU MAÏS SOUFFLÉ EMBALLÉE ET SON PROCÉDÉ DE FABRICATION

(30) Priorität: 16.10.2020 DE 102020127345
(43) Veröffentlichungstag der Anmeldung: 23.08.2023
(73) Patentinhaber: PCO Group GmbH, 23942 Dassow (DE)
(72) Erfinder: LEMKE, Stefan, 23911 Pogeez (DE); WISNIEWSKI, Rafal, 75-392 Koszalin (PL)
(74) Vertreter: Weidner Stern Jeschke
(86) Internationale Anmeldenummer: PCT/DE2021/200117
(87) Internationale Veröffentlichungsnummer: WO 2022/078555

(56) Entgegenhaltungen:
- EP-A2- 0 262 791
- US-B1- 6 200 611
- ANONYMOUS: "Delicious Bars - Fibre One AU", 5 March 2019 (2019-03-05), XP055867622, Retrieved from the Internet <URL:https://web.archive.org/web/20190305160431/https://www.fibreone.com.au/delicious-bars/#popcorn-bars> [retrieved on 20211130]

## Beschreibung

Die Erfindung betrifft verpacktes Popcorn-Konfekt und ein Verfahren zur Herstellung von verpacktem Popcorn-Konfekt zum Vertrieb über Supermärkte, Ladenlokale oder Online-Plattformen.

Popcorn wird zumeist in frisch zubereiteter Form konsumiert, jedoch ist es aber auch üblich, frisch zubereitetes Popcorn in Folienbeuteln luftdicht zu verpacken, damit das Popcorn seine knusprige Konsistenz bis zum Verzehr bewahrt. Um dem Popcorn beispielsweise einen Karamell- oder Schokoladengeschmack zu verleihen, ist auch bekannt, das frisch zubereitete Popcorn zusammen mit erwärmtem Karamell oder erwärmter Schokolade in einen Behälter umzurühren, um die einzelnen Popcorn-Flocken oder Bällchen mit einem Karamell- bzw. Schokoladenüberzug zu versehen. Die auf ihrer gesamten Oberfläche mit Karamell bzw. Schokolade beschichteten Popcorn-Flocken werden dann unter weiterem Rühren abgekühlt, um sie nach dem Erkalten und Aushärten des Überzugs zu vereinzeln und in einer vorbestimmten Menge in einem Folienbeutel zu verpacken. Ein Beispiel eines derartigen verpackten Popcorn-Konfekts ist das vom Anmelder unter der Bezeichnung Crunchy-Popcorn vertriebene Popcorn-Konfekt.

Ein Nachteil dieser Art von Popcorn-Konfekt besteht darin, dass das Popcorn-Konfekt dem Konsumenten bei der Entnahme aus dem Folienbeutel nur unzureichend optisch präsentiert werden kann, obwohl das optische Erscheinungsbild bei der Kaufentscheidung eine zunehmend wichtigere Rolle spielt.

Weiterhin ist aus der US 6,200,611 B1 ein Popcorn-Riegel bekannt. Der Riegel ist aus Popcornflocken gepresst und mit einer Zier-Kuvertüre beträufelt. Der Popcorn-Riegel kann dabei nur durch Beißen oder mit einem Messer getrennt werden, eine Entnahme von einzelnen Popcornflocken wird durch die Ausbildung als Riegel verhindert.

Die EP 0 262 791 A2 offenbart ein Verfahren zum Herstellen eines mit einer Süßspeise beschichteten Snacks wie beispielsweise Popcorn.

Weiterhin sind kuchenförmige Süßspeisen sowie weitere Riegel bekannt, welche ebenfalls Popcorn ausweisen können.

Ausgehend hiervon liegt der Erfindung die Aufgabe zugrunde, Popcorn-Konfekt und ein Verfahren zur Herstellung von Popcorn-Konfekt bereitzustellen, womit sich das Popcorn-Konfekt bei der Entnahme aus der Verpackung in optischer Hinsicht sehr gut präsentieren lässt, wobei das Popcorn-Konfekt aber auch in geschmacklicher und in haptischer Hinsicht dem bekannten Popcorn-Konfekt in nichts nachsteht.

Zur Lösung dieser Aufgabe umfasst das erfindungsgemäße verpackte Popcorn-Konfekt einen Behälter, eine Schicht aus zubereitetem Popcorn im Behälter, sowie einen Überzug aus einer in erwärmtem Zustand fließfähigen und in abgekühltem Zustand festen Kuvertüre und/oder einer erstarrten Glasur, der die Oberseite der Popcorn-Schicht teilweise bedeckt und die Popcorn-Schicht zusammenhält. Der Behälter mit der teilweise mit Kuvertüre und/oder Glasur überzogenen Popcorn-Schicht ist in einem gasdichten Folienbeutel eingeschlossen, um die knusprige Konsistenz des frisch zubereiteten Popcorns zu bewahren.

Somit kann in einem Behälter befindliches Popcorn erfindungsgemäß "fixiert" werden, da der Überzug (Glasur) die einzelnen Popcorn-Flocken miteinander verbindet. Auch kann somit verhindert werden, dass bei einem Konsumieren Popcorn-Flocken aus dem Behälter unerwünschter Weise herausfallen.

Als Glasur wird im Rahmen der vorliegenden Patentanmeldung eine aus Zucker, insbesondere Puderzucker, sowie einer wasserhaltigen Flüssigkeit, wie Wasser, Fruchtsaft und/oder Frischeiweiß hergestellte fließfähige Masse bezeichnet, die durch Trocknung erstarrt.

Als Kuvertüre wird im Rahmen der vorliegenden Patentanmeldung eine aus Zucker, insbesondere Puderzucker, sowie einem oder mehreren tierischen und/oder pflanzlichen fetthaltigen Produkten, wie Butter, Sojaöl, Schokolade, Milchpulver, Kakaopulver und/oder Kakaobutter hergestellte Masse bezeichnet, die durch Erwärmen fließfähig oder flüssig wird und beim Erkalten erstarrt.

Zum Verzehr kann der Behälter mit Inhalt aus dem Folienbeutel entnommen werden, wobei sich der Inhalt des Behälters optisch ansprechend präsentiert, weil die Kuvertüre und/oder Glasur beim Transport und bei der Lagerung die Popcorn-Schicht weitgehend zusammenhält und einer Relativbewegung der einzelnen Popcorn-Flocken innerhalb der Schicht entgegenwirkt, zum Beispiel wenn das verpackte Popcorn-Konfekt in eine Schräglage gebracht wird oder wenn ein mit Folienbeuteln gefüllter Karton beim Transport gedreht wird.

Vorzugsweise ist die Schicht aus zubereitetem Popcorn im Behälter einlagig oder maximal zweilagig, da die auf die Oberseite der Popcornschicht aufgebrachte Kuvertüre und/oder Glasur im Wesentlichen die oberste Lage zusammenhält, während in darunter liegenden Lagen der Zusammenhalt nur soweit gewährleistet ist, wie die Kuvertüre und/oder Glasur bis dorthin vordringt.

Bei dem Popcorn der Popcorn-Schicht kann es sich um unbehandeltes Popcorn handeln, das vor seiner Verwendung vorteilhaft nicht zerkleinert zu werden braucht. Vorteilhaft wird aber behandeltes Popcorn verwendet, zum Beispiel gesüßtes Popcorn oder mit Karamell oder Schokolade überzogenes Popcorn, wobei das letztere auch dazu beitragen kann, den Zusammenhalt der Popcorn-Schicht zu verbessern, indem man das mit Schokolade oder Karamell beschichtete Popcorn vor, bei oder nach dem Aufbringen der Kuvertüre und/oder Glasur erwärmt.

Eine bevorzugte Ausgestaltung der Erfindung sieht vor, dass der Überzug aus süßer Schokoladen-Kuvertüre oder süßer oder salziger Karamell-Kuvertüre besteht, da diese einerseits geschmacklich besonders gut mit dem Popcorn harmonieren, andererseits jedoch in erkaltetem Zustand ausreichend stabil sind, um die Popcorn-Schicht auch dann weitgehend zusammenzuhalten, wenn das verpackte Popcorn-Konfekt beim Transport in eine Schräglage gebracht oder gedreht wird.

Alternativ oder zusätzlich ist es jedoch auch möglich, als Überzug eine Glasur aus Zuckerguss oder dergleichen zu verwenden, die beim Aufbringen fließfähig ist und nach einiger Zeit erstarrt, womit sich ein ähnliches Ergebnis erzielen lässt.

Ein zusätzlicher Schutz des Popcorn-Konfekts vor Beschädigung bei der Handhabung, z.B. beim Transport oder bei der Lagerung, wird durch den Behälter erreicht, der vorteilhaft die Form einer flachen Schale mit einem Boden und vom Boden aus nach oben überstehenden umlaufenden Seitenwänden besitzt. Die Seitenwände sind zumindest so hoch und bevorzugt geringfügig höher als die Popcorn-Schicht und sind vor allem aus ästhetischen und herstellungstechnischen Gründen zweckmäßig leicht nach oben und außen geneigt.

Als weiterer Schutz für den Inhalt, zur Verbesserung der Stabilität des Behälters sowie auch zur Verbesserung des optischen Erscheinungsbildes vor dem Verzehr ist am oberen Rand der Seitenwände vorteilhaft ein nach außen ragender Steg vorgesehen, der außerdem auch beim Entstapeln der leeren Behälter und beim Einbringen der gefüllten Behälter in den Folienbeutel von Vorteil sein kann. Damit sich der Behälter mit der Popcorn-Schicht und der Kuvertüre gut im Folienbeutel verpacken lässt, besitzt er in der Draufsicht vorteilhaft einen rechteckigen Umriss.

Während der Behälter zweckmäßig aus einem Zuschnitt aus Papier, Karton oder Pappe gefaltet oder alternativ aus Bagasse (Zuckerrohrresten) geformt ist, besteht der Folienbeutel bevorzugt aus einer gasundurchlässigen oder weitestgehend gasundurchlässigen Folie, so dass das Popcorn im Beutel auch bei längerer Lagerung knusprig bleibt.

Der Überzug aus Kuvertüre und/oder Glasur erstreckt sich bevorzugt in Form von linienförmigen, streifenförmigen oder fleckenartigen Mustern über die Oberseite der Popcorn-Schicht, so dass er diese teilweise bedeckt. Die Muster können zum Beispiel Wellenlinien, Zickzacklinien, Schleifen, Kreise oder Herzen oder unregelmäßige Muster sein.

Um sowohl das ästhetische Erscheinungsbild des Popcorn-Konfekts vor dem Verzehr und das Geschmackserlebnis beim Verzehr weiter zu verbessern, sieht eine andere bevorzugte Ausgestaltung der Erfindung vor, dass auf der Popcorn-Schicht und dem Überzug aus Kuvertüre und/oder Glasur Partikel mindestens eines essbaren Streuprodukts verteilt sind, wobei die Partikel vorteilhaft am Überzug haften und/oder in Vertiefungen der Popcornschicht liegen, so dass sie ihre Lage überwiegend auch dann beibehalten, wenn das verpackte Popcorn-Konfekt in eine Schräglage gebracht wird oder wenn ein mit Folienbeuteln gefüllter Karton beim Transport gedreht wird.

Die Partikel können vorteilhaft gehackte Nüsse, Erdnüsse oder Mandeln, Nuss- oder Mandelblätter, Kokosraspeln, kleine bunte Süßigkeiten, wie Schokolinsen, - streusel, -röllchen, -sterne oder Zuckerstreusel, -dragees, -sternchen, -herzen, -einhörner, kleine Gummibärchen oder Jelly Beans oder dergleichen sein.

Das erfindungsgemäße Verfahren zur Herstellung von verpacktem Popcorn-Konfekt aus Popcorn und einer in erwärmtem Zustand fließfähigen und in abgekühltem Zustand festen Kuvertüre und/oder einer erstarrenden Glasur umfasst die folgenden Schritte:
- Zubereiten von Popcorn durch Poppen von Popcorn-Mais;
- Bereitstellen eines Behälters;
- Befüllen des Behälters mit einer Schicht des Popcorns;
- Aufbringen der erwärmten Kuvertüre und/oder der Glasur in einem fließfähigen Zustand auf die Oberseite der Popcorn-Schicht, so dass die Kuvertüre und/oder die Glasur die Popcorn-Schicht teilweise bedeckt;
- Abkühlen der Kuvertüre oder Erstarren der Glasur unter Bildung eines die Popcorn-Schicht im Behälter zusammenhaltenden festen Überzugs;
- Verpacken des Behälters mit dem Popcorn und dem Überzug in einem gasdichten Folienbeutel.

Wenn die erwärmte Kuvertüre und/oder die Glasur in fließfähigem oder flüssigem Zustand auf die Oberseite der Popcorn-Schicht aufgebracht werden, benetzt die Kuvertüre und/oder die Glasur die Popcorn-Flocken und bleibt beim Erkalten bzw. beim Erstarren an diesen haften. Wegen des geringen Gewichts der Popcorn-Flocken sind sowohl die Adhäsion der Kuvertüre und/oder der Glasur an den Popcorn-Flocken als auch die innere Kohäsion der erkalteten Kuvertüre und/oder der erstarrten Glasur groß genug, um ein Ablösen der Kuvertüre bzw. Glasur von den Popcorn-Flocken und ein Zerbrechen der erkalteten Kuvertüre bzw. der erstarrten Glasur zwischen benachbarten Popcorn-Flocken und damit eine Relativbewegung der Popcorn-Flocken untereinander weitgehend zu verhindern, wenn zum Beispiel das verpackte Popcorn-Konfekt in eine Schräglage gebracht wird oder wenn ein mit Folienbeuteln gefüllter Karton beim Transport gedreht wird.

Eine vorteilhafte Ausgestaltung des erfindungsgemäßen Verfahrens sieht vor, dass auf der Popcorn-Schicht und dem noch nicht erkalteten bzw. erstarrten Überzug aus Kuvertüre (18) und/oder Glasur Partikel mindestens eines essbaren Streuprodukts verteilt werden, so dass zumindest ein Teil der Partikel am Überzug haftet.

Das Aufbringen der Kuvertüre und/oder Glasur und der Partikel des mindestens einen essbaren Streuprodukts auf die Popcorn-Schicht erfolgen bevorzugt, indem die Behälter mit der Popcorn-Schicht auf einem Förderer unter eine Auftragsvorrichtung und unmittelbar danach unter eine Streuvorrichtung bewegt werden, wobei in der Auftragsvorrichtung Glasur und/oder erwärmte Kuvertüre in fließfähigem Zustand auf die Oberseite der Popcorn-Schicht aufgebracht wird, und wobei in der Streuvorrichtung die Partikel von oben auf die Popcorn-Schicht und auf die noch nicht erkalteten Kuvertüre und/oder noch nicht erstarrte Glasur gestreut werden.

Im Folgenden wird die Erfindung anhand von einigen in der Zeichnung dargestellten Ausführungsvarianten näher erläutert.
Fig. 1 zeigt eine Oberseitenansicht eines leeren Behälters zum Verpacken von Popcorn-Konfekt;
Fig. 2 zeigt eine Längsseitenansicht des Behälters;
Fig. 3 zeigt eine Stirnseitenansicht des Behälters;
Fig. 4 zeigt eine Draufsicht auf den Behälter nach dem Befüllen mit einer Schicht Popcorn;
Fig. 5 zeigt eine Draufsicht auf den Behälter nach dem Aufbringen der Kuvertüre auf die Popcorn-Schicht gemäß einer ersten Ausführungsvariante;
Fig. 6 zeigt eine Draufsicht auf den Behälter nach dem Aufbringen der Kuvertüre auf die Popcorn-Schicht gemäß einer zweiten Ausführungsvariante;
Fig. 7 zeigt eine Draufsicht auf den Behälter nach dem Aufbringen der Kuvertüre auf die Popcorn-Schicht gemäß einer dritten Ausführungsvariante;
Fig. 8 zeigt eine Draufsicht auf den Behälter nach dem Aufstreuen von Partikeln eines essbaren Streuprodukts auf die Popcorn-Schicht und Kuvertüre der ersten Ausführungsvariante vor dem Verpacken des Popcorn-Konfekts in einem Folienbeutel;
Fig. 9 zeigt eine Ansicht entsprechend Fig. 3, jedoch mit dem Folienbeutel;
Fig. 10 zeigt eine schematische Seitenansicht von Teilen einer Vorrichtung zur Herstellung des Popcorn-Konfekts;
Fig. 11 zeigt eine Schnittansicht der Vorrichtung in Fig. 10.

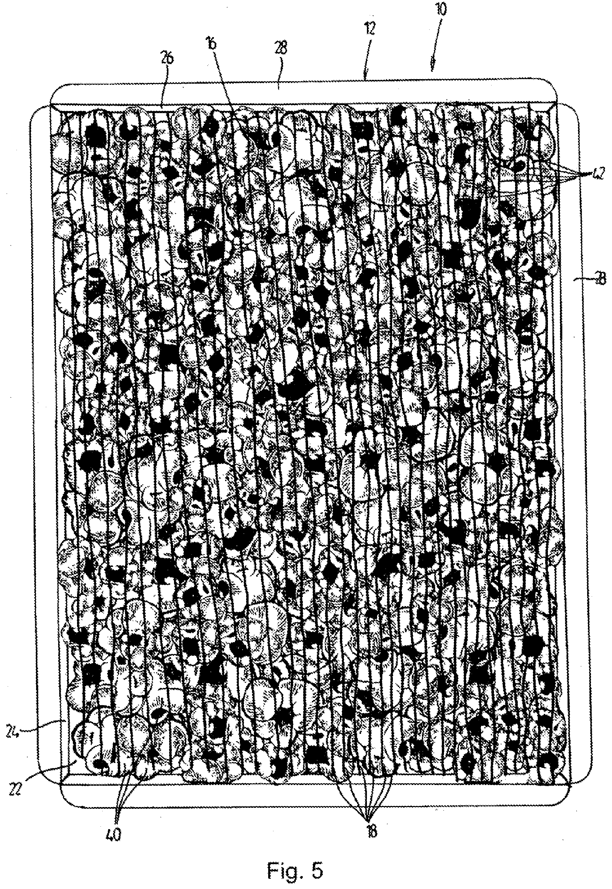

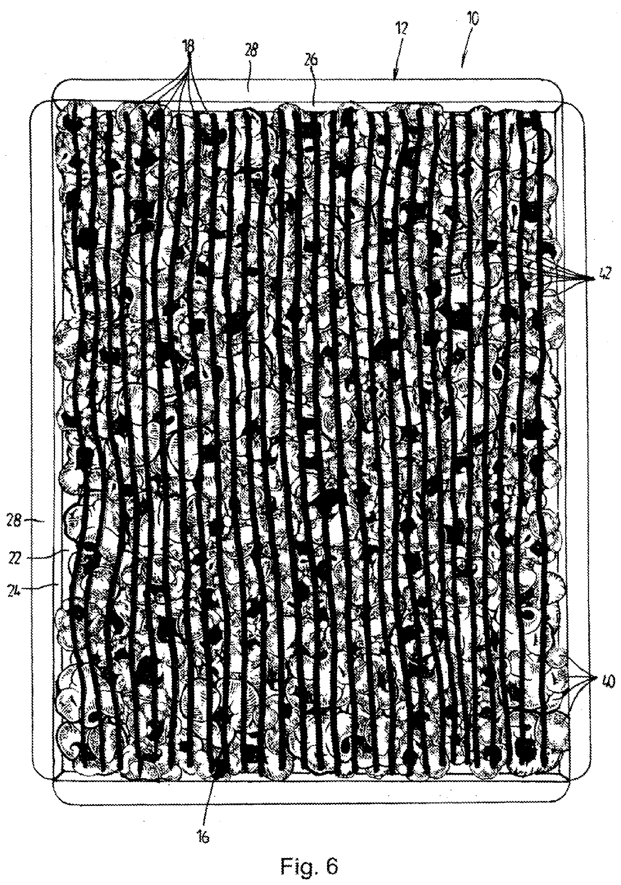

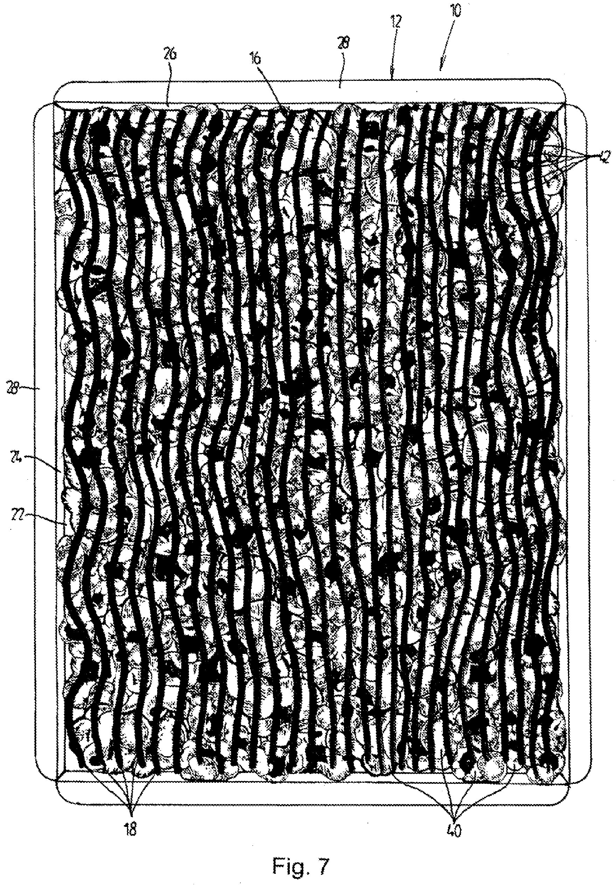

Das in den Figuren 5 bis 8 der Zeichnung dargestellte, erst teilweise verpackte Popcorn-Konfekt 10 besteht im Wesentlichen einem flachen Behälter 12, einer Schicht 14 aus zubereitetem Popcorn 16 im Behälter 12, einem Überzug 16 aus einer in erwärmtem Zustand fließfähigen und in abgekühltem Zustand festen Kuvertüre 18, sowie ggf. Partikeln 20 eines essbaren Streuprodukts. Das fertige Popcorn-Konfekt 10 wird in einem dünnen gasundurchlässigen Folienbeutel 38 aus einer mit Aluminium beschichteten oder bedampften Kunststofffolie 64 verpackt.

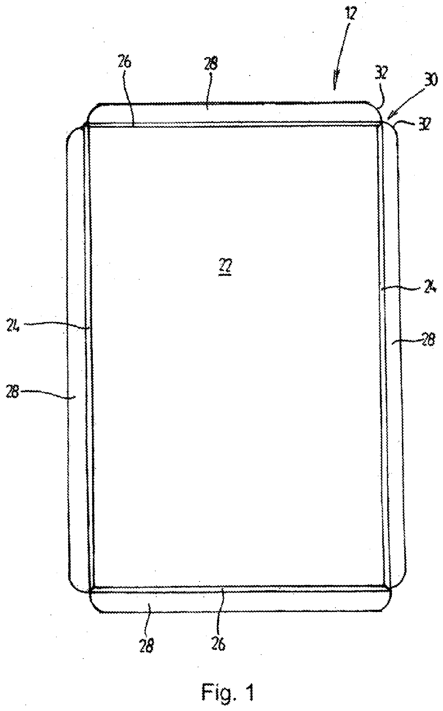

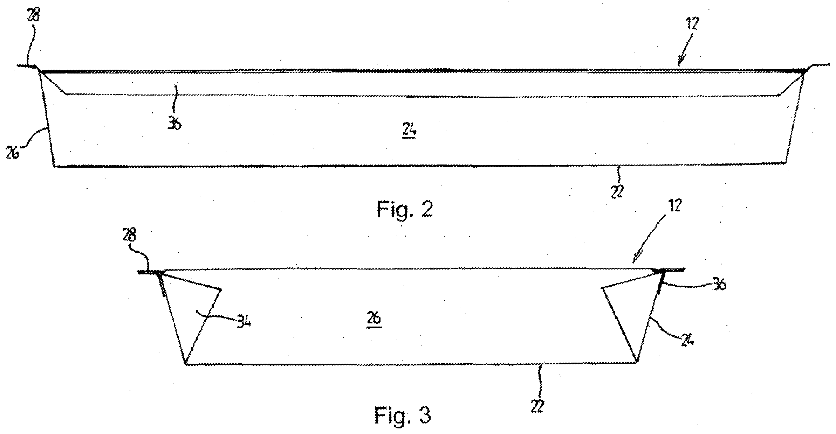

Wie am besten in den Figuren 1 bis 3 dargestellt, besitzt der durch Falten aus einem einteiligen Zuschnitt aus Karton hergestellte Behälter 12 die Form einer flachen Schale mit einem Boden 22, sowie vier einstückig mit dem Boden 22 verbundenen und vom Boden aus unter einem Winkel von etwa 75 Grad nach oben und außen überstehenden Seitenwänden 24, 26, deren obere Ränder paarweise parallel zueinander sind. Über den oberen Rand jeder Seitenwand 24, 26 steht ein Steg 28 nach außen über, der parallel zum Boden 14 ausgerichtet ist und an den Ecken 30 des Behälters 12 gerundete Enden 32 besitzt. Zwischen jeweils zwei benachbarten Seitenwänden 24, 26 wird beim Falten des Behälters ein doppellagiger Zwickel 34 gebildet, der gegen die benachbarte kürzere Seitenwand 26 anliegend mit dieser verklebt wird, wie in Fig. 3 dargestellt. Um dem Behälter 12 in Längsrichtung eine größere Steifigkeit zu verleihen, sind die Stege 28 an den oberen Rändern der längeren Seitenwände 24 doppellagig ausgebildet, wobei ihre äußeren Ränder 36 jeweils nach unten umgeschlagen sind, von außen her gegen einen oberen Randstreifen der benachbarten Seitenwand 24 anliegen und mit diesem verklebt sind, wie in Fig. 2 und 3 dargestellt.

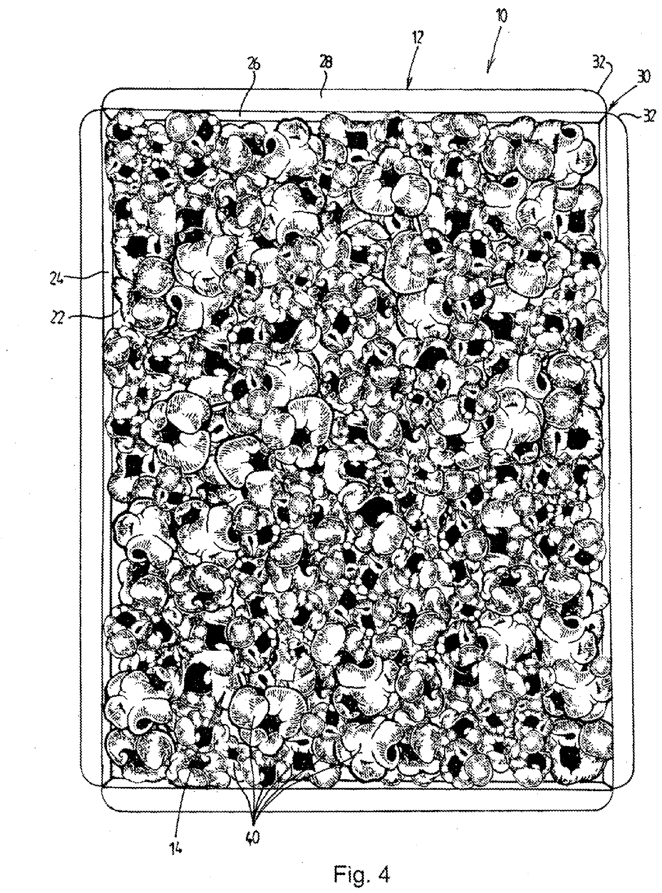

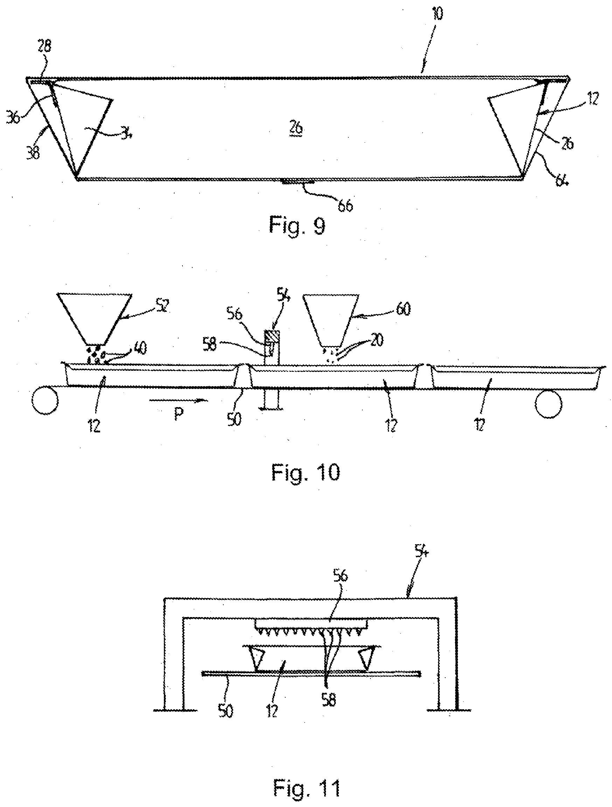

Die Popcorn-Schicht 14 besteht aus einzelnen, bevorzugt frisch zubereiteten Popcorn-Flocken 40, die in einer einzelnen Lage dicht und weitestgehend lückenlos nebeneinander auf dem Boden 22 des Behälters 12 liegen und diesen vollständig bedecken, wie am besten in Fig. 4 dargestellt. Die Popcorn-Schicht 14 ragt nach oben zu nicht über den Steg 28 am oberen Rand der Seitenwände 24, 26 hinaus, wie in Fig. 9 dargestellt.

Wie in den Figuren 5 bis 8 dargestellt, besitzt der Überzug 16 aus Kuvertüre 18 die Form von mehreren Bahnen oder Streifen 42, die sich über die Oberseite der Popcorn-Schicht 14 erstrecken und diese zum Teil bedecken. In der Zeichnung verlaufen die Bahnen oder Streifen 42 allgemein in Richtung der Längsachse des Behälters 12. Jedoch kann der Überzug 16 auch aus einer Vielzahl von einzelnen, in geringem Abstand voneinander angeordneten unregelmäßig verteilten Flecken oder einer Kombination von Flecken und Streifen oder Bahnen bestehen, die sich auch in anderen und/oder wechselnden Richtungen über die Oberseite der Popcorn-Schicht 14 erstrecken können, wie z.B. in Schleifen, im Zickzack oder in unregelmäßigen Mustern. Grundsätzlich ist es sogar möglich Streifen in Herzform oder mit einer anderen Form auf die Oberseite der Popcorn-Schicht 14 aufzubringen. Die Breite der einzelnen Bahnen oder Streifen 42 bzw. Flecken sowie der Abstand benachbarter Bahnen oder Streifen 42 oder Flecken ist so gewählt, dass die Popcorn-Flocken 40 der Popcorn-Schicht 14 von der Kuvertüre 18 weitgehend zusammengehalten werden und sich beim Kippen des Behälters 12 nicht einzelne Popcorn-Flocken 40 aus dem Verbund der Schicht 14 lösen.

Bei der ersten und zweiten Ausführungsvariante verlaufen die Bahnen oder Streifen 42 allgemein geradlinig und parallel zu den längeren Seitenwänden 24, während sie bei der dritten Ausführungsvariante wellenförmig verlaufen.

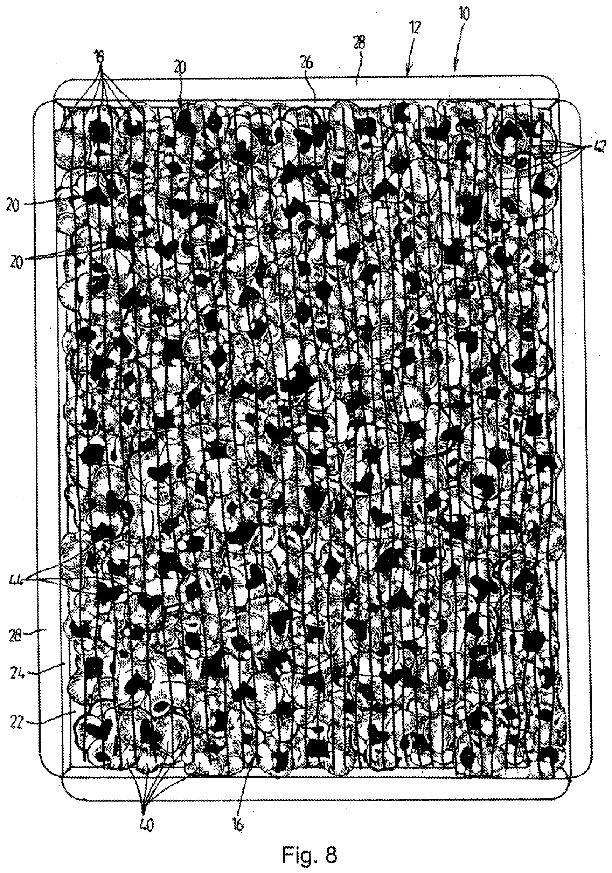

Bei den Partikeln 20 des essbaren Streuprodukts, die nur bei der Ausführungsvariante in Fig. 8 dargestellt sind, handelt es sich um kleine Schokoladenherzen 44, die im Handel erhältlich sind. Die Schokoladenherzen 44 haften teilweise am Kuvertüre-Überzug 16 und liegen teilweise in Vertiefungen zwischen benachbarten Popcorn-Flocken 40. Selbstverständlich können auch andere kleine Süßigkeiten, wie Schokoladelinsen, Schokoladestreusel, Schokoladesterne, Schokoladeröllchen oder Zuckerstreusel, Zuckerdragees, Zuckersternchen, Zuckerherzen, Zuckereinhörner, kleine Gummibärchen oder Jelly Beans als süßes essbares Streuprodukt auf die mit der Kuvertüre 18 überzogene Popcorn-Schicht 14 gestreut werden, um nur einige Beispiele zu nennen. Auch gehackte Nüsse, gehackte Erdnüsse oder gehackte Mandeln, Nussblätter, Mandelblätter oder Kokosraspeln können als Streugut verwendet werden.

Zur Herstellung des Popcorn-Konfekts 10 wird Popcorn durch Poppen von Popcorn-Mais frisch zubereitet und dann in einen der vorgefertigten Behälter 12 gefüllt. Wie in Fig. 10 und 11 dargestellt, wird der Behälter 12 dazu auf einem Förderer 50 unter einer Dosiereinrichtung 52 hindurchbewegt, die eine vorbestimmte Menge Popcorn in den Behälter 12 dosiert und dort in Form einer einlagigen Schicht 14 verteilt.

Anschließend wird der Behälter vom Förderer 50 in Richtung des Pfeils P in Fig. 10 unter einem Portal 54 mit einer Kuvertüre-Auftragsvorrichtung 56 hindurchbewegt. Die Auftragsvorrichtung 56 besitzt eine Mehrzahl von nebeneinander angeordneten, nach unten gerichteten Spritzdüsen 58, denen erwärmte fließfähige Kuvertüre unter Druck zugeführt wird, um sie in mehreren Bahnen oder Streifen 42 nebeneinander auf die Oberseite der Popcorn-Schicht 14 aufzubringen, so dass die Kuvertüre-Bahnen oder Streifen 42 die Popcorn-Schicht 14 teilweise bedecken.

Alternativ kann der Behälter vom Förderer 50 unter eine andere Kuvertüre- und/oder Glasur-Auftragsvorrichtung (nicht dargestellt) bewegt werden, die in Bezug zum Förderer 50 sowohl in Förderrichtung (Pfeil P) als auch quer zur Förderrichtung beweglich ist und ebenfalls mehrere nach unten gerichteten Spritzdüsen aufweist. Dann wird der Förderer 50 angehalten und die Auftragsvorrichtung in Förderrichtung und quer dazu über dem Behälter hin- und her bewegt, während fließfähige Kuvertüre oder/oder Glasur unter Druck in die Spritzdüsen zugeführt wird, um sie auf die Oberseite der Popcorn-Schicht 14 aufzubringen. In Abhängigkeit vom Bewegungsmuster der Auftragsvorrichtung wird die Kuvertüre und/oder Glasur in Schleifen, im Zickzack oder in anderen Mustern auf die Popcorn-Schicht 14 aufgebracht, so dass die letztere danach ebenfalls von dem Überzug aus Kuvertüre und/oder Glasur teilweise bedeckt wird.

Unmittelbar hinter dem Portal 54 mit der Auftragsvorrichtung 56 bzw. unmittelbar hinter der anderen Kuvertüre- und/oder Glasur-Auftragsvorrichtung befindet sich eine Streuvorrichtung 60, aus der die Partikel 20 des essbaren Streuprodukts von oben auf die teilweise mit Kuvertüre 18 und/oder Glasur überzogene Popcorn-Schicht 14 gestreut werden. Aufgrund des geringen Abstands von der Auftragsvorrichtung 56 bleiben zumindest die mit der Kuvertüre 18 und/oder Glasur in Kontakt tretenden Partikel 20 an der noch warmen und damit etwas klebrigen Kuvertüre 18 bzw. an der noch nicht erstarrten Glasur haften.

Nach dem Erkalten der Kuvertüre 18 bzw. dem Erstarren der Glasur wird das Popcorn-Konfekt 10 luftdicht verpackt, indem die mit Aluminium bedampfte oder beschichtete gasundurchlässige Kunststofffolie 64 um den Behälter 12 herumgelegt und der Behälter 12 gasdicht in die Kunststofffolie 64 eingeschweißt wird. Dazu werden zuerst die entgegengesetzten Ränder der Kunststofffolie 64 an der Unterseite des Behälters 12 entlang einer zu den längeren Seitenwänden 24 parallelen Längsschweißnaht 66 verschweißt, bevor der dabei gebildete Folienschlauch zwischen benachbarten Behältern 12 entlang von zwei zu den kürzeren Seitenwänden 26 parallelen Querschweißnähten (nicht dargestellt) verschweißt und durchtrennt wird, um die Folienbeutel 38 zu bilden.

Beim weiteren Transport der Behälter 12 bzw. beim Verpacken und Stapeln des verpackten Popcorn-Konfekts 10 in den Folienbeuteln 38 rutschen die nicht an der Kuvertüre 18 und/oder der Glasur haftenden Partikel 20 in die Vertiefungen zwischen benachbarten Popcorn-Flocken 40, wo sie zur Ruhe kommen.

Für den Fall, dass das Popcorn-Konfekt 10 nach dem Öffnen des Folienbeutels 38 nicht vollständig verzehrt werden sollte, kann es für kurze Zeit in einem Backofen erhitzt werden. Nach dem Abkühlen und dem Erkalten der Kuvertüre 18 besitzt das Popcorn des Popcorn-Konfekts 10 wieder seine ursprüngliche knusprige Konsistenz.

## Patentansprüche

1. Verpacktes Popcorn-Konfekt (10), mit einem Behälter (12), einer Schicht (14) aus zubereitetem Popcorn aus einzelnen Popcorn-Flocken im Behälter (12), einem Überzug (16) aus einer in erwärmtem Zustand fließfähigen und in abgekühltem Zustand festen Kuvertüre (18) und/oder einer erstarrten Glasur, der die Oberseite der Popcorn-Schicht (14) teilweise bedeckt und die Popcorn-Schicht (14) zusammenhält, das im Behälter befindliche Popcorn fixiert und die einzelnen Popcorn-Flocken derart miteinander verbindet, dass verhindert wird, dass bei einem Konsumieren Popcorn-Flocken unerwünschter Weise aus dem Behälter herausfallen, sowie einem Folienbeutel, der den Behälter (12) mit der Popcorn-Schicht (14) und dem Überzug (16) aus Kuvertüre (18) luftdicht umschließt.

2. Verpacktes Popcorn-Konfekt (10) nach Anspruch 1, **dadurch gekennzeichnet, dass** die Schicht (14) aus zubereitetem Popcorn im Behälter (12) maximal ein- bis zweilagig ist.

3. Verpacktes Popcorn-Konfekt (10) nach Anspruch 1 oder 2, **dadurch gekennzeichnet, dass** die Kuvertüre (18) eine süße Schokoladen-Kuvertüre oder eine süße oder salzige Karamell-Kuvertüre ist.

4. Verpacktes Popcorn-Konfekt (10) nach Anspruch 3, **dadurch gekennzeichnet, dass** die Kuvertüre (18) und/oder Glasur die Oberseite der Popcorn-Schicht (14) in Form von linienförmigen, streifenförmigen, fleckenartigen oder unregelmäßigen Mustern teilweise bedeckt.

5. Verpacktes Popcorn-Konfekt (10) nach einem der vorangehenden Ansprüche, **gekennzeichnet durch** auf der Popcorn-Schicht (14) und dem Überzug (16) aus Kuvertüre (18) und/oder Glasur verteilte Partikel (20) mindestens eines essbaren Streuprodukts, wobei die Partikel (20) am Überzug (16) haften und/oder in Vertiefungen der Popcorn-Schicht (14) liegen.

6. Verpacktes Popcorn-Konfekt (10) nach Anspruch 5, **dadurch gekennzeichnet, dass** die Partikel (20) gehackte Nüsse oder Mandeln oder Nuss- oder Mandelblätter sind.

7. Verpacktes Popcorn-Konfekt (10) nach Anspruch 5, **dadurch gekennzeichnet, dass** die Partikel (20) kleine bunte Süßigkeiten sind.

8. Verpacktes Popcorn-Konfekt (10) nach einem der vorangehenden Ansprüche, **dadurch gekennzeichnet, dass** der Behälter (12) in Draufsicht einen allgemein rechteckigen oder quadratischen Umriss besitzt.

9. Verpacktes Popcorn-Konfekt (10) nach einem der vorangehenden Ansprüche, **dadurch gekennzeichnet, dass** der Behälter (12) aus einem Zuschnitt aus Papier, Karton oder Pappe gefaltet oder aus Bagasse geformt ist.

10. Verpacktes Popcorn-Konfekt (10) nach einem der vorangehenden Ansprüche, **dadurch gekennzeichnet, dass** der Behälter (12) einen Boden (22), Seitenwände (24, 26) und einen am oberen Rand der Seitenwände (24, 26) parallel zum Boden (22) überstehenden Steg (28) besitzt.

11. Verfahren zur Herstellung von verpacktem Popcorn-Konfekt (10) aus Popcorn und einer in erwärmtem Zustand fließfähigen und in abgekühltem Zustand festen Kuvertüre (18) und/oder einer fließfähigen erstarrenden Glasur, umfassend die folgenden Schritte:
- Bereitstellen eines Behälters (12);
- Befüllen des Behälters (12) mit einer Schicht (14) des Popcorns;
- Aufbringen der erwärmten Kuvertüre (18) und/oder der Glasur in fließfähigem Zustand auf die Oberseite der Popcorn-Schicht (14), so dass die Kuvertüre (18) und/oder die Glasur die Popcorn-Schicht (14) teilweise bedeckt;
- Bildung eines die Popcorn-Schicht (14) im Behälter (12) teilweise bedeckenden und zusammenhaltenden festen Überzugs (16) durch Abkühlen der Kuvertüre (18) und/oder Erstarren der Glasur;
- Verpacken des Behälters (12) mit der Popcorn-Schicht (14) und dem Überzug (16) in einem gasdichten Folienbeutel (38).

12. Verfahren nach Anspruch 11, **dadurch gekennzeichnet, dass** auf der Popcorn-Schicht (14) und dem noch nicht erkalteten bzw. erstarrten Überzug (16) aus der Kuvertüre (18) und/oder der Glasur Partikel (20) mindestens eines essbaren Streuprodukts verteilt werden, so dass zumindest ein Teil der Partikel (20) am Überzug (16) haftet.

13. Verfahren nach Anspruch 11 oder 12, **dadurch gekennzeichnet, dass** die Behälter (12) mit der Popcorn-Schicht (14) auf einem Förderer (50) unter eine Auftragsvorrichtung (56) bewegt werden, aus der die erwärmte Kuvertüre (18) und/oder die Glasur in fließfähigem Zustand auf die Oberseite der Popcorn-Schicht (14) aufgebracht wird.

14. Verfahren nach Anspruch 13, **dadurch gekennzeichnet, dass** die Auftragsvorrichtung in Bezug zum Behälter (12) in Förderrichtung und/oder quer zur Förderrichtung bewegt wird, um die Kuvertüre (18) und/oder Glasur derart auf die Oberseite der Popcorn-Schicht (14) aufzubringen, dass der Überzug (16) in gleiche oder verschiedene Richtungen verlaufende linienförmige oder streifenförmige Muster oder fleckenartige und/oder unregelmäßige Muster bildet.

## Claims

1. A packaged popcorn confection (10), comprising a container (12), a layer (14) of prepared popcorn composed of individual popcorn flakes in the container (12), a coating (16) made of a couverture (18) that is flowable in a heated state and solid in a cooled state and/or a solidified glaze, the coating partially covering the upper side of the popcorn layer (14) and holding the popcorn layer (14) together, fixing the popcorn contained in the container in place, and connecting the individual popcorn flakes to one another in such a manner that the popcorn flakes are prevented from undesirably falling out of the container during consumption, and a film pouch that hermetically encloses the container (12) containing the popcorn layer (14) and the coating (16) made of the couverture (18).

2. The packaged popcorn confection (10) according to claim 1, **characterized in that** the layer (14) of prepared popcorn in the container (12) has a maximum thickness of one to two layers.

3. The packaged popcorn confection (10) according to claim 1 or 2, **characterized in that** the couverture (18) is a sweet chocolate couverture or a sweet or salty caramel couverture.

4. The packaged popcorn confection (10) according to claim 3, **characterized in that** the couverture (18) and/or the glaze partially covers the upper side of the popcorn layer (14) in the form of line-shaped, strip-shaped, spot-like, or irregular patterns.

5. The packaged popcorn confection (10) according to any one of the preceding claims, **characterized by** particles (20) of at least one edible sprinkle product distributed over the popcorn layer (14) and the coating (16) made of the couverture (18) and/or the glaze, wherein the particles (20) adhere to the coating (16) and/or lie in depressions in the popcorn layer (14).

6. The packaged popcorn confection (10) according to claim 5, **characterized in that** the particles (20) are chopped nuts or almonds or nut or almond flakes.

7. The packaged popcorn confection (10) according to claim 5, **characterized in that** the particles (20) are small, colorful candies.

8. The packaged popcorn confection (10) according to any one of the preceding claims, **characterized in that** the container (12) has a generally rectangular or square outline when viewed from above.

9. The packaged popcorn confection (10) according to any one of the preceding claims, **characterized in that** the container (12) is folded from a blank made of paper, paperboard, or cardboard, or is molded from bagasse.

10. The packaged popcorn confection (10) according to any one of the preceding claims, **characterized in that** the container (12) has a bottom (22), side walls (24, 26), and a flange (28) extending from the upper edge of the side walls (24, 26) parallel to the bottom (22).

11. A method for producing a packaged popcorn confection (10) from popcorn and a couverture (18) that is flowable in a heated state and solid in a cooled state and/or a flowable glaze that solidifies, comprising the following steps:
- providing a container (12);
- filling the container (12) with a layer (14) of the popcorn;
- applying the heated couverture (18) and/or the glaze in a flowable state to the upper side of the popcorn layer (14), such that the couverture (18) and/or the glaze partially covers the popcorn layer (14);
- forming a solid coating (16) that partially covers and holds together the popcorn layer (14) in the container (12), by cooling the couverture (18) and/or solidifying the glaze;
- packaging the container (12) containing the popcorn layer (14) and the coating (16) in a gas-tight film pouch (38).

12. The method according to claim 11, **characterized in that** particles (20) of at least one edible sprinkle product are distributed over the popcorn layer (14) and the coating (16) made of the couverture (18) and/or the glaze before the coating has cooled or solidified, respectively, such that at least some of the particles (20) adhere to the coating (16).

13. The method according to claim 11 or 12, **characterized in that** the containers (12) containing the popcorn layer (14) are moved on a conveyor (50) beneath an application device (56), from which the heated couverture (18) and/or the glaze is applied in a flowable state to the upper side of the popcorn layer (14).

14. The method according to claim 13, **characterized in that** the application device is moved relative to the container (12) in the conveying direction and/or transversely to the conveying direction in order to apply the couverture (18) and/or the glaze to the upper side of the popcorn layer (14) in such a manner that the coating (16) forms line-shaped or strip-shaped patterns extending in the same or different directions, or spot-like and/or irregular patterns.

## Revendications

1. Confiserie de pop-corn emballée (10), comprenant un récipient (12), une couche (14) de pop-corn préparé constituée de flocons individuels de pop-corn dans le récipient (12), un revêtement (16) constitué d'une couverture (18) fluide à l'état chauffé et solide à l'état refroidi et/ou d'un glaçage solidifié, lequel recouvre partiellement la face supérieure de la couche de pop-corn (14) et maintient celle-ci assemblée, fixe le pop-corn se trouvant dans le récipient et relie les flocons individuels de pop-corn les uns aux autres de manière à empêcher que, lors de la consommation, des flocons de pop-corn ne tombent de manière indésirable hors du récipient, ainsi qu'un sachet en film qui enveloppe de manière étanche à l'air le récipient (12) contenant la couche de pop-corn (14) et le revêtement (16) en couverture (18).

2. Confiserie de pop-corn emballée (10) selon la revendication 1, **caractérisée en ce que** la couche (14) de pop-corn préparé dans le récipient (12) est constituée d'une ou de deux couches au maximum.

3. Confiserie de pop-corn emballée (10) selon la revendication 1 ou 2, **caractérisée en ce que** la couverture (18) est une couverture sucrée au chocolat ou une couverture sucrée ou salée au caramel.

4. Confiserie de pop-corn emballée (10) selon la revendication 3, **caractérisée en ce que** la couverture (18) et/ou le glaçage recouvrent partiellement la face supérieure de la couche de pop-corn (14) sous la forme de motifs linéaires, de motifs en bandes, de motifs en forme de taches ou de motifs irréguliers.

5. Confiserie de pop-corn emballée (10) selon l'une des revendications précédentes, **caractérisée par** des particules (20) d'au moins un produit de saupoudrage comestible, réparties sur la couche de pop-corn (14) et sur le revêtement (16) en couverture (18) et/ou en glaçage, les particules (20) adhérant au revêtement (16) et/ou se trouvant dans des creux de la couche de pop-corn (14).

6. Confiserie de pop-corn emballée (10) selon la revendication 5, **caractérisée en ce que** les particules (20) sont des fruits à coque ou des amandes hachés, ou des lamelles de fruits à coque ou d'amandes.

7. Confiserie de pop-corn emballée (10) selon la revendication 5, **caractérisée en ce que** les particules (20) sont de petites confiseries multicolores.

8. Confiserie de pop-corn emballée (10) selon l'une des revendications précédentes, **caractérisée en ce que** le récipient (12) présente, en vue de dessus, un contour globalement rectangulaire ou carré.

9. Confiserie de pop-corn emballée (10) selon l'une des revendications précédentes, **caractérisée en ce que** le récipient (12) est plié à partir d'un flan en papier, en cartonnette ou en carton, ou est moulé à partir de bagasse.

10. Confiserie de pop-corn emballée (10) selon l'une des revendications précédentes, **caractérisée en ce que** le récipient (12) comporte un fond (22), des parois latérales (24, 26) et un rebord (28) faisant saillie, parallèlement au fond (22), au niveau du bord supérieur des parois latérales (24, 26).

11. Procédé de fabrication d'une confiserie de pop-corn emballée (10) à partir de pop-corn et d'une couverture (18) fluide à l'état chauffé et solide à l'état refroidi et/ou d'un glaçage fluide se solidifiant, comprenant les étapes suivantes :
- mise à disposition d'un récipient (12) ;
- remplissage du récipient (12) avec une couche (14) de pop-corn ;
- application de la couverture chauffée (18) et/ou du glaçage à l'état fluide sur la face supérieure de la couche de pop-corn (14), de sorte que la couverture (18) et/ou le glaçage recouvrent partiellement la couche de pop-corn (14) ;
- formation d'un revêtement solide (16), recouvrant partiellement la couche de pop-corn (14) dans le récipient (12) et maintenant celle-ci assemblée, par refroidissement de la couverture (18) et/ou solidification du glaçage ;
- emballage du récipient (12), contenant la couche de pop-corn (14) et le revêtement (16), dans un sachet en film étanche aux gaz (38).

12. Procédé selon la revendication 11, **caractérisé en ce que** des particules (20) d'au moins un produit de saupoudrage comestible sont réparties sur la couche de pop-corn (14) et sur le revêtement (16) en couverture (18) et/ou en glaçage, qui n'est pas encore refroidi ou solidifié, selon le cas, de sorte qu'au moins une partie des particules (20) adhère au revêtement (16).

13. Procédé selon la revendication 11 ou 12, **caractérisé en ce que** les récipients (12) contenant la couche de pop-corn (14) sont déplacés, sur un convoyeur (50), sous un dispositif d'application (56), depuis lequel la couverture chauffée (18) et/ou le glaçage sont appliqués à l'état fluide sur la face supérieure de la couche de pop-corn (14).

14. Procédé selon la revendication 13, **caractérisé en ce que** le dispositif d'application est déplacé par rapport au récipient (12) dans la direction de convoyage et/ou transversalement à la direction de convoyage, afin d'appliquer la couverture (18) et/ou le glaçage sur la face supérieure de la couche de pop-corn (14) de telle manière que le revêtement (16) forme des motifs linéaires ou des motifs en bandes s'étendant dans des directions identiques ou différentes, ou des motifs en forme de taches et/ou des motifs irréguliers.
